# EUROPÄISCHE PATENTSCHRIFT

(11) **EP 2 236 662 B1**
(45) Veröffentlichungstag und Bekanntmachung des Hinweises auf die Patenterteilung: **23.12.2020**
(21) Anmeldenummer: 10150484.3
(22) Anmeldetag: 12.01.2010
(51) Int. Cl.: B32B 27/20, D06N 3/14, C08G 18/10, C08G 18/48, C08G 18/73, C09J 175/08, B32B 5/02, B32B 7/14, B32B 27/06, B32B 27/12, B32B 27/40, D06N 3/00, B32B 27/08

(54) **Polymermischung, enthaltend ein Isocyanat-Präpolymer.**
Polymer mixture containing a prepolymer having isocyanate groups.
Mélange de polymères contenant un prépolymère ayant des groupes isocyanates.

(30) Priorität: 26.03.2009 DE 102009003680
(43) Veröffentlichungstag der Anmeldung: 06.10.2010
(73) Patentinhaber: Benecke-Kaliko AG, 30419 Hannover (DE)
(72) Erfinder: Gerken, Andreas, Dr., 30161, Hannover (DE); Buehring, Jürgen, Dr., 30900, Wedemark (DE)
(74) Vertreter: Finger, Karsten

(56) Entgegenhaltungen:
- DE-A1- 19 632 925
- DE-A1-102005 012 812
- US-A- 3 384 506

## Beschreibung

Die Erfindung betrifft eine Polymermischung, insbesondere für wasserdampfdurchlässige und flüssigkeitsundurchlässige Dekorteile in Fahrzeugen und / oder für Sitz- und Liegemöbel.

Als Dekorteile für Fahrzeuge und / oder für Sitz- und Liegemöbel werden meist Verbundgebilde eingesetzt. Verbundgebilde sind Gebilde aus Verbundwerkstoffen, die durch die Kombination unterschiedlicher Materialien erhalten werden und deren chemische, physikalische und sonstige Eigenschaften durch die Kombination der einzelnen Verbundschichten speziell eingestellt werden können. Verbundgebilde sind beispielsweise auch Schaumfolien oder Kunstleder, die vielseitig als Dekor- und Bezugsstoffe Verwendung finden. Solche Schaumfolien und Kunstleder besitzen in der Regel eine polymere, sichtbare obere Schicht, welche maßgeblich für Eigenschaften wie Alterungs- und Lichtstabilität oder Abrieb- und Stoßfestigkeiten verantwortlich ist, eine oder mehrere optionale polymere ggf. geschäumte Zwischenschichten und ein Trägermaterial insbesondere aus Textil, Vlies, Abstandsgewirken oder geschäumten Polymeren auf Basis von PVC, Polyolefinen oder Polyurethanen. Die Trägermaterialien sind vor allem für die mechanischen Festigkeiten und die Dehnbarkeiten verantwortlich.

In der Philosophie der Automobilhersteller werden die Fahrgastzellen nicht nur als Funktionsraum, sondern zunehmend als Lebens- und Wohlfühlraum für die Fahrzeuginsassen angesehen. Dementsprechend hoch sind Anforderungen an die Dekormaterialien bzw. Dekorteile, die auf allen sichtbaren Innenflächen wie Armaturbrettern, Türseiten etc. eingesetzt werden. Als besonders hochwertig werden Leder angesehen, die in idealer Weise ein Wohlfühlklima vermitteln. Da Leder in entsprechend guter Qualität jedoch sehr teuer und auf dem Weltmarkt nur begrenzt verfügbar sind, werden in der Regel Kunstleder verwendet, die kaum von echten Ledermaterialien unterschieden werden können. Vor allem Kunstleder, die auf Polyurethanen basieren, übertreffen in einigen Eigenschaften die Originalleder und werden so von vielen Nutzern sogar als hochwertiger angesehen. Zudem lassen sich auf Kunstlederoberflächen Strukturen realisieren, wie sie in der Natur nicht vorkommen, was insbesondere den Designwünschen der Automobilhersteller entgegenkommt.
Die Behandlung der Fahrgastzelle als Lebensraum führt natürlich zu entsprechend hohen Anforderungen an die Dekormaterialien, was insbesondere die Gebrauchseigenschaften und Unbedenklichkeit der eingesetzten Materialien betrifft.
Kunstleder haben demnach ideale Voraussetzungen im gesamten Kfz-Innenraum Anwendungen zu finden. Insbesondere im Sitzbereich ist den Kunstledern jedoch eine weitreichende Verwendung verwehrt geblieben, da diese in der Regel feuchtigkeits- und luftundurchlässig sind und so dem Benutzer schon nach kurzer Zeit ein unangenehmes Gefühl vermitteln, was insbesondere im Falle des Fahrzeuglenkers auch ein bedeutender Sicherheitsaspekt ist. So verliert ein Mensch im Ruhezustand 30 g Wasser pro Stunde bei Aktivität sogar bis zu 1000 g (Quelle: New Materials Permeable to Water Vapor, Harro Träubel, Springer 1999).

Daher werden in besessenen Bereichen überwiegend textile Materialien und in Sonderfällen auch weitestgehend unbeschichtete Leder oder auf Mikrofaservlies koagulierte Kunstleder mit sichtbarer Textilstruktur eingesetzt. Alle diese Materialien sind hinsichtlich Lichtechtheiten, Abrieb- und Gebrauchseigenschaften, Flüssigkeitsdurchlässigkeiten und Reinigungsfähigkeiten in ihren Eigenschaften im Vergleich zu Kunstledern deutlich schlechter. Zudem ist eine Design-seitig gewünschte Anpassung der Sitzoberflächen zur Harmonisierung des Kfz-Innenraums nur bedingt möglich. Kunstleder werden in der Regel nur in speziellen Fahrzeugen z.B. Taxen eingesetzt, nachdem sie sichtbar perforiert wurden, um eine aktive Klimatisierung über im Sitzunterbau integrierte Ventilatoren durch die Sitzoberfläche zu ermöglichen. Der Wunsch nach klimaaktiven Kunstledern kann zurzeit also nicht befriedigt werden.

Nicht "klimaaktive" Kunstleder werden in der Regel als mehrschichtiges Laminat dargestellt, welches sukzessive aufgebaut wird. Beispielsweise werden in DE-A-2208995, DE-A-2330175 und GB-A-1144176 Verbundgebilde mit einer oder mehreren Polyurethanschichten und einer Trägerschicht offenbart. In US-A-4102719 wird ein mit Polyurethan beschichteter Träger beschrieben, wobei das Polyurethan aus einem Polyethertriol und einem Polyetherdiol hergestellt und nachvernetzt wird. Beispielhaft erfolgt die Herstellung in fünf Schritten in einem Umkehrbeschichtungsverfahren, wie es beispielsweise in DE-A-4422871 oder auch in Ullmann's Encyclopedia of Industrial Chemistry, 1999 Wiley-VCH, Weinheim unter "Leather Imitates" beschrieben ist.
DE 196 32 925 A1 beschreibt lösungsmittelfreie bzw. -arme reaktionsfähige Massen aus NCO-Präpolymer auf Basis (cyclo)aliphatischer Polyisocyanate und bestimmten Kettenverlängerern, welche eine angemessene Topfzeit besitzen und sich hervorragend härten lassen. Derartige Massen eignen sich insbesondere als Beschichtungen auf Substraten jeglicher Art, vorzugsweise auf Leder und Textilien.

US 3,384,506 beschreibt hydrophilische Urethankompositionen, mit denen Gewebe beschichtet und oder imprägniert werden können zur Verbesserung der Atmungsaktivität der Gewebe. In US 3,384,506 werden Blockierungsmittel eingesetzt, um die chemische Isocyanatgruppe zu blockieren und so ein sofortiges Durchreagieren der Mischung zu verhindern.

Um eine Klima- oder Atmungsaktivität bei gleichzeitig guten Gebrauchseigenschaften in einem Kunstleder zu generieren, muss in erster Linie eine ausreichende Wasserdampfdurchlässigkeit bei gleichzeitiger Nichtdurchlässigkeit für Flüssigkeiten sichergestellt sein.
Bedingungen für die Atmungsaktivität eines Materials sind eine Mikroporösität mit ausreichend kleinen Poren bei einer gleichzeitig homogenen Oberfläche (wie z.B. bei Goretex), das gleichzeitig gute hydrodynamische Eigenschaften mit einem guten Wasserab- und -desorptionspotential besitzt. Um ein gutes hydrodynamisches Profil zu erreichen, muss die Porengröße unterhalb einer bestimmten Größe bleiben, um eine Kapillarwirkung zu erzeugen und die Porenanzahl muss ausreichend hoch sein. Die Schichtdicke eines Materials wirkt sich in der Regel kontraproduktiv aus.

Es ist daher die Aufgabe der Erfindung, eine Polymermischung bereitzustellen, die sich insbesondere bei Verwendung für wasserdampfdurchlässige und flüssigkeitsundurchlässige Dekorteile in Fahrzeugen und / oder für Sitz- und Liegemöbel, durch eine zum Stand der Technik erhöhte Wasserdampf- und Luftdurchlässigkeit auszeichnet.
Des Weiteren ist es die Aufgabe der Erfindung eine wasserdampfdurchlässige und / oder flüssigkeitsundurchlässige Schicht oder Folie und / oder ein wasserdampfdurchlässiges und / oder flüssigkeitsundurchlässiges Verbundgebilde bereitzustellen, welche(s) sich durch eine verbesserte Wasserdampfdurchlässigkeit und eine verbesserte Luftdurchlässigkeit auszeichnet.
Gelöst wird die erste Aufgabe dadurch, dass die Polymermischung der oben genannten Art durch folgende Zusammensetzung gekennzeichnet ist:
- 7-95 Gew. % zumindest eines aliphatischen und / oder aromatischen Isocyanat-Präpolymeren mit einem Gehalt an Isocyanatgruppen zwischen 2 und 20 Gew. %,
- 5 - 93 Gew. % zumindest eines difunktionellen Polyols,
- 0 - 50 Gew. % zumindest eines tri- oder höherfunktionellen Polyols,
- 0,01 - 2 Gew. % zumindest eines Katalysators,
- 0,5 - 12 Gew. % zumindest eines Reaktionsverzögeres, wobei der Reaktionsverzögerer Acetylaceton und / oder 2-Ethylhexansäure ist,
- 0 - 30 Gew. % zumindest eines Füllstoffes,
- 1 - 25 Gew. % zumindest eines Lösungsmittels mit einem Siedepunkt kleiner oder gleich 150°C und ausgewählt aus der Gruppe bestehend aus Ketonen und / oder Ester und / oder Alkoholen,
- 0 - 45 Gew. % weitere Zusatzstoffe.

Die in dieser Schrift verwendeten Angaben in Gew. -% beziehen sich immer auf die Lieferform der jeweiligen Mischungskomponente.

Überraschenderweise wurde gefunden, dass sich durch eine Polymermischung der obigen Zusammensetzung die Wasserdampfdurchlässigkeit und die Luftdurchlässigkeit deutlich verbessern lassen.

Die Polymermischung enthält 7 bis 95 Gew. % zumindest eines aliphatischen und / oder aromatischen Isocyanat-Präpolymeren mit einem Gehalt an Isocyanatgruppen zwischen 2 und 20 Gew. %.
Ist das Isocyanat-Präpolymer aufgebaut auf der Basis von aliphatischen Isocyanaten, so wird dieses ausgewählt aus der Gruppe bestehend aus 1,6-Hexandiisocyanat (HDI) und / oder Isophorondiisocyanat (IPDI) und / oder Dicyclohexylmethan-4,4'-diisocyanat (H₁₂MDI) und / oder 1,4-Cyclohexandiisocyanat und / oder Bis(isocyanatomethyl)cyclohexan und besitzt einen Masseanteil der freien oder reversibel blockierten NCO-Gruppen zwischen 2 und 20 %, bevorzugt zwischen 5 und 13%.
Ist das Isocyanat-Präpolymer aufgebaut auf der Basis von aromatischen Isocyanaten, so ist dieses ausgewählt aus der Gruppe bestehend aus Methylendiisocyanat (MDI) und / oder Toluylendiisocyanat (TDI) und / oder oder Naphthylendiisocyanat und besitzt einen Masseanteil der freien oder reversibel blockierten NCO-Gruppen zwischen 2 und 20 %, bevorzugt zwischen 4 und 17 %.

Weiterhin enthält die Polymermischung 5 bis 93 Gew. % zumindest eines difunktionellen Polyols und 0 bis 50 Gew. %, bevorzugt aber wenigstens aber 0,01 Gew. %, zumindest eines tri - oder höherfunktionellen Polyols.
Das difunktionelle und / oder trifunktionelle und / oder höherfunktionelle Polyol ist hierbei bevorzugt ausgewählt ist aus der Gruppe bestehend aus Polyesterpolyolen und / oder Polyetherpolyolen und / oder Polythioethetpolyolen und / oder Polycarbonatpolyolen und / oder hydroxylgruppenhaltige aliphatische Acetalen, besitzt primäre Hydroxyl-Funktionalitäten und ist gegenüber Isocyanatgruppen reaktiv.
Als Polyole kommen generell Polyole mit einer Molekularmasse von 60 bis 8000 vorzugsweise von 90 bis 6000 in Frage. Mischungen aus mindestens zwei Polyolen aus der genannten Gruppe sind auch möglich. Zudem können zur Modifizierung der Eigenschaften des ausreagierten Systems im Ansatz auch andere Verbindungen eingesetzt werden, die mit Isocyanaten durch reaktive Wasserstoffatome reagieren können, indem ein Teil der Polyole substituiert wird. Solche Verbindungen enthalten zwei oder mehr reaktive Gruppen, die als OH-Gruppen, SH-Gruppen, NH-Gruppen, NH₂-Gruppen oder CH-acide Gruppen, beispielsweise in β-Diketoverbindungen, vorliegen. Im Verhältnis zu den reaktiven Polyolen können diese Verbindungen im Bereich 1 bis 50 %, vorzugsweise jedoch zwischen 1 und 25 % eingesetzt werden.

Als Polyole werden insbesondere aliphatische Polyole eingesetzt, die in einer besonders bevorzugten Ausführungsform difunktionell sind und an den funktionalisierten Enden eine erhöhte Reaktivität gegenüber Isocyanatgruppen zeigen.
Diese Reaktivitätssteigerung wird durch eine partielle oder vollständige Epoxidierung von primären Hydroxyl-Endgruppen erreicht oder dadurch, dass die reaktiven funktionalisierten Enden in der Form

R-(CH₂)ₙ-OH

vorliegen, wobei n ≥ 4 ist.

Als reaktives Polyol können auch nicht extra reaktivierte Polyole eingesetzt werden, die einen Funktionalisierungsgrad > 2 besitzen. Diese Polyole wirken jedoch vernetzend und können nur als Copolyol in einer Menge von weniger als 50 % im Verhältnis zum difunktionellen reaktivem Polyol eingesetzt werden, da sonst nur sehr spröde Filme gebildet werden.

Die Polymermischung enthält weiterhin 0,01 bis 2 Gew. %, bevorzugt 0,05 bis 0,5 Gew. %, zumindest eines Katalysators.
Als Katalysator werden bevorzugt Metallkatalysatoren auf Basis von Zinn, Zirkonium, Titan, Bismuth, Blei oder Nickel, die bei Mischung mit der Isocyanat/Polyol-Masse eine lange Topfzeit bei Raumtemperatur (> 30 min) ermöglichen und die bei Temperaturen > 130 °C die Isocyanat-Polyol-Reaktion so stark beschleunigen, dass sie innerhalb von 2 min abgeschlossen ist, wobei die ersten vier genannten bevorzugt sind.
Sehr gute Ergebnisse wurden erzielt, wenn es sich bei dem Metallkatalysator um Dioctylzinn-isooctylmercaptoacetat DOT(IOMA) und / oder Nickelacetylacetonat handelt. Auch ein Gemisch verschiedener Metallkatalysatoren ist möglich.
In besonderer Weise sind Katalysatoren oder Mischungen daraus mit der folgenden Formel verwendbar: (R₁)ₙ-Sn-( S- CH₂-CO-OR₂)ₘ, wobei R₁ einen Alkylrest darstellt insbesondere einen n-Alkylrest mit Methyl, n-Butyl oder n-Octyl und R₂ einen linearen oder verzweigten Alkylrest darstellt und n und m Zahlen aus dem Bereich 1 bis 3 darstellen, wobei gilt: m = 4 - n.

Die Polymermischung enthält 0,5 bis 12 Gew. %, bevorzugt 0,5 bis 10 Gew. %, besonders bevorzugt 0,5 bis 5 Gew. %, zumindest eines Reaktionsverzögerers. Hierbei handelt es sich um Acetylaceton und / oder 2-Ethylhexansäure. Die Verwendung eines Reaktionsverzögerers macht eine weitere Erhöhung der Topfzeit möglich.
Des Weiteren enthält die Polymermischung 0 bis 30 Gew. % zumindest eines Füllstoffes. Hierbei kann es sich um einen nicht hydrophilen oder einen hydrophilen Füllstoff handeln, wobei auch Gemische der genannten Arten möglich sind.
Findet ein nicht hydrophiler Füllstoff Verwendung, so wird dieser in Mengen zwischen 0,1 bis 30 Gew. %, bevorzugt in Mengen zwischen 0,5 bis 10 Gew. %, besonders bevorzugt in Mengen zwischen 0,5 bis 5 Gew. %, eingesetzt.
Der nicht hydrophile Füllstoff sind bevorzugt beschichtete oder unbeschichtete Glaskugeln, bevorzugt Glashohlkugeln.

Findet ein hydrophiler Füllstoff Verwendung, so wird dieser in Mengen zwischen 0,1 bis 30 Gew. %, bevorzugt in Mengen zwischen 0,1 bis 15 Gew. %, eingesetzt. Hydrophile Füllstoffe sind in dieser Schrift Füllstoffe, die im Kontakt mit Wasser oder einer wassergesättigten Luftatmosphäre mehr als 5 Gew. -% Wasser aufnehmen.
Der hydrophile Füllstoff ist hierbei bevorzugt ausgewählt aus der Gruppe bestehend aus Hydrogelen und / oder Zucker und / oder Salzen und / oder Harnstoff und / oder Carboxymethylcellulosen und / oder Gelatine und / oder Polyvinylalkoholen und / oder Proteinen und / oder Polyethylenglykolen und / oder Polyamide und / oder Polyacrylamide und / oder Superabsorber und / oder Polyurethane mit Polyethylenglykol-Softsegmenten, wobei letztere bevorzugt sind.
Die hydrophilen Füllstoffe werden meist durch Funktionalisierung in die Polymermatrix eingebaut werden. Dazu sind sie durch eine Funktionalisierung über OH-, NH-, NH₂-, oder SH-Gruppen, über acide Wasserstoffatome, wie in β-Diketoverbindungen, oder über Isocyanatgruppen gekennzeichnet.

Weiterhin enthält die Polymermischung 1 bis 25 Gew. % zumindest eines Lösungsmittels. Das Lösungsmittel hat einen Siedepunkt kleiner oder gleich 150°C, bevorzugt kleiner oder gleich 100°C und ist ausgewählt aus der Gruppe bestehend aus Ketonen und / oder Ester und / oder Alkoholen. Bevorzugt handelt es sich bei dem Lösungsmittel um Ethylacetat und / oder Aceton und / oder 2-Butanon.

Darüber hinaus enthält die Polymermischung 0 bis 45 Gew. %, bevorzugt 0 bis 35 Gew. %, insbesondere wenigstens 0,1 Gew. %, insbesondere wiederum wenigstens 0,5 Gew. %, weitere Zusatzstoffe. Diese sind ausgewählt aus der Gruppe, bestehend aus Lichtschutzmitteln, wie UV-Absorber und reversible Radikalfänger, und / oder Antioxidationsmittel und / oder Netzmittel und / oder Substratnetzmittel und / oder Emulgatoren und / oder Verlaufmittel und / oder filmbildende Hilfsmittel und / oder Rheologiehilfsmittel und / oder Flammschutzmittel und / oder Biozide und / oder Neutralisationsmittel und / oder Entschäumer und / oder Verdicker und / oder anorganische Füllstoffe und / oder organische Füllstoffe und / oder Pigmente und / oder Treibmittel und / oder Verstärkungsmittel und / oder Trennmittel.

Die erfindungsgemäße Polymermischung wird als Beschichtungsmaterial und / oder zum Aufbau eines mehrschichtigen Verbundgebildes verwendet.

Zur Lösung der zweiten Aufgabe ist zum einen die wasserdampfdurchlässige und / oder flüssigkeitsundurchlässige Schicht oder Folie aus wenigstens einer Polymermischung nach einem der Ansprüche 1 bis 7 aufgebaut und zum anderen enthält das wasserdampfdurchlässige und / oder flüssigkeitsundurchlässige Verbundgebilde wenigstens eine Schicht, welche aus einer Polymermischung nach einem der Ansprüche 1 bis 7 aufgebaut ist.

Die Schichtdicke oder die Foliendicke der wasserdampfdurchlässigen und / oder flüssigkeitsundurchlässigen Schicht oder Folie beträgt zwischen 5 und 1000 µm.

Das wasserdampfdurchlässige und / oder flüssigkeitsundurchlässige Verbundgebilde besteht wenigstens aus zwei Schichten oder aus wenigstens einer Schicht und einem Trägermaterial, wobei wenigstens eine Schicht aufgebaut ist aus einer Polymermischung nach einem der Ansprüche 1 bis 7. Bevorzugt handelt es sich hierbei um die oberste sichtbare Schicht.
In einer bevorzugten Ausführungsform beträgt die Schichtdicke der Schicht, die aufgebaut ist aus einer Polymermischung nach einem der Ansprüche 1 bis 32, zwischen 5 und 1000 µm, bevorzugt zwischen 10 und 500 µm.

Die oberste sichtbare Schicht ist vorzugsweise mit einer Narbung oder Struktur und / oder mit einer Lackschicht versehen, welche vorzugsweise aus mindestens zwei Schichten besteht.

Vorzugsweise ist das Trägermaterial des wasserdampfdurchlässigen und /oder flüssigkeitsundurchlässigen Verbundgebildes wasserdampfdurchlässig und ist ausgewählt aus der Gruppe bestehend aus wasserdampfdurchlässigen Geweben, Gestricken, Gewirken, Gelegen, Vliesen, Mikrofaservliesen und offenporige Polyolefin- und
Polyurethanschäumen.
Das Trägermaterial kann aber auch ausgewählt sein aus der Gruppe der mit Superabsorbern oder mit Aktivkohle ausgerüsteten Textilien.
Das Trägermaterial wird anhand einer nicht flächig aufgetragenen Kaschiermasse oder anhand eines Kaschierfilms mit der darüberliegenden Schicht dauerhaft verbunden. Die Kaschierung wird mit reaktiven oder nicht reaktiven schmelzbaren Pulvern oder mit punktförmig aufgetragener Kaschiermasse auf Basis von Dispersionen, Lösungsmittel enthaltende Kaschiermassen oder High Sold-Kaschiermassen oder durch ein nicht vollflächiges Aufdrucken mit einer Walze oder mittels einer Klebeweb-Kaschierung durchgeführt. Als gut geeignet zur Kaschierung hat sich ein aufgesprühter oder aufgefiberter Hotmeltkleber auf Polyurethanbasis herausgestellt.

Das wasserdampfdurchlässige und / oder flüssigkeitsundurchlässige Verbundgebilde ist bevorzugt mikroperforiert, wobei die Lochdichte wenigstens 10 Löcher / cm², bevorzugt wenigstens 25 Löcher / cm² beträgt.
Bei einer solchen Mikroperforation sind die Löcher bei einer Person mit normaler Sehkraft mit bloßem Auge aus 30 cm Entfernung nicht oder kaum sichtbar.
Die Mikroperforation kann vollständig oder auch nur in Teilbereichen vorgenommen werden. Die durch die Mikroperforation erzeugten Löcher sind bei Temperaturen zwischen 40 und 200°C, bevorzugt zwischen 40 und 120°C, dauerhaft stabil.

Derartige Verbundgebilde finden, wie eingangs erwähnt, in der Automobilindustrie, aber auch in der Möbel- bzw. Polsterindustrie, als Teil eines Sitz- und / oder Liegemöbels, oder in der Textilindustrie, insbesondere der Bekleidungsindustrie, Verwendung.

Überraschenderweise hat sich gezeigt, dass die erfindungsgemäße Polymermischung , die erfindungsgemäße wasserdampfdurchlässige und / oder flüssigkeitsundurchlässige Schicht oder Folie und das erfindungsgemäße wasserdampfdurchlässige und / oder flüssigkeitsundurchlässige Verbundgebilde zur Herstellung eines abriebfesten und verschmutzungsunanfälligen Produktes, bevorzugt in Form eines Innenverkleidungsteils eines Fahrzeugs, insbesondere eines Sitzbespannmaterials, auf dessen Rückseite sich Vorrichtungen zum Abtransport von Feuchtigkeit befinden, dienen kann. Die Vorrichtung zum Abtransport von Feuchtigkeit wird durch ein aktiv oder passiv belüftetes Abstandsgewirke, Vlies, offenporigen Schaum, Fasern oder durch in einen Sitzschaum eingebrachte Kanäle realisiert.
Des Weiteren kann das abriebfeste und verschmutzungsunanfällige Produkt die Form eines Polsterbespannmaterials für Sitz- und Liegemöbel oder eines Bekleidungsmaterials haben.

Der absolute Wert der Wasserdampfdurchlässigkeit des abriebfesten und verschmutzungsunanfälligen Produktes verändert sich nach einem Anschmutztest nicht negativ, wobei die Wasserdampfdurchlässigkeit nach DIN 53 333 bestimmt und der Anschmutztest gemäß DIN EN ISO 12947-1 durchgeführt wird.
Die Erfindung wird nachfolgend anhand von Beispielen noch näher veranschaulicht.

### Beispiel 1 (erfindungsgemäß)

Zur Herstellung eines erfindungsgemäßen Verbundgebildes mit Hilfe erfindungsgemäßer Polymermischungen als fähige reaktive Streichmasse können beispielhaft folgende Mischungen b) bis f) verwendet werden, wobei Beispiel a) als Vergleichsbeispiel herangezogen werden kann.:
**a)** (Vergleichsbeispiel)
   1000 g Poly(tetramethylenglykol); Molekulargewicht 1000 g/mol, OH-Zahl 56
   984 g Diisocyanat-Präpolymer auf Basis von HDI und einem Polyether;
   Molekulargewicht 1600
   g/mol; Isocyanatgehalt 5,2 %
   20 g Katalysator auf Basis von Übergangsmetallkatalysatoren insbes. auf Basis von Zinn
   Reaktionsindex 1,22
**b)**
   1000 g Poly(tetramethylenglykol); Molekulargewicht 1000 g/mol, OH-Zahl 56
   984 g Diisocyanat-Präpolymer auf Basis von HDI und einem Polyether;
   Molekulargewicht 1600
   g/mol; Isocyanatgehalt 5,2 %
   20 g Katalysator auf Basis von Übergangsmetallkatalysatoren insbes. auf Basis von Zinn
   Reaktionsindex 1,22
   181 g Ethylacetat
**c)**
   1000 g Poly(tetramethylenglykol); Molekulargewicht 1000 g/mol, OH-Zahl 56
   984 g Diisocyanat-Präpolymer auf Basis von HDI und einem Polyether;
   Molekulargewicht 1600
   g/mol; Isocyanatgehalt 5,2 %
   20 g Katalysator auf Basis von Übergangsmetallkatalysatoren insbes. auf Basis von Zinn
   Reaktionsindex 1,22
   181 g Methyl ethylketon
**d)**
   1000 g Poly(tetramethylenglykol); Molekulargewicht 1000 g/mol, OH-Zahl 56
   984 g Diisocyanat-Präpolymer auf Basis von HDI und einem Polyether;
   Molekulargewicht 1600
   g/mol; Isocyanatgehalt 5,2 %
   20 g Katalysator auf Basis von Übergangsmetallkatalysatoren insbes. auf Basis von Zinn
   Reaktionsindex 1,22
   181 g Aceton
**e)**
   1000 g Poly(tetramethylenglykol); Molekulargewicht 1000 g/mol, OH-Zahl 56
   984 g Diisocyanat-Präpolymer auf Basis von HDI und einem Polyether;
   Molekulargewicht 1600
   g/mol; Isocyanatgehalt 5,2 %
   20 g Katalysator auf Basis von Übergangsmetallkatalysatoren insbes. auf Basis von Zinn
   Reaktionsindex 1,22
   181 g 2-Methoxypropylacetat
**f)**
   500 g Impranil HS-62® (2-Butanonoxim-blockiertes Präpolymer, Fa. Bayer)
   500 g Impranil HS-80® (2-Butanonoxim-blockiertes Präpolymer, Fa. Bayer)
   71 g Imprafix HSC® (cycloaliphatisches Diamin, Fa. Bayer)
   10 g Levacast Fluid® SN (Verarbeitungshilfsmittel, Fa. Bayer)
   147 g Aceton
   Unmittelbar nach dem Abmischen wurde die reaktive Streichmasse mit Hilfe einer Walzenrakel-Streichmaschine mit einer definierten Dicke von 200 µm auf einen dehäsiv ausgerüsteten Träger aufgebracht und der aufgetragene Film bei 155°C 60 Sekunden in einem Heißluftofen getrocknet.
   Auf diesen Film wurde dann optional eine reaktive Streichmasse der Zusammensetzung g) aufgebracht.
**g)**
   500 g Poly(oxypropylen)triol (Molekulargewicht 6000)
   610 g Poly(oxypropylen)diol (Molekulargewicht 4000)
   400 g MDI (Methylendiphenyldiisocyanatoligomer) (Molekulargewicht 1200)
   10 g Nickelacetylacetonat 10 %ig in Poly(oxypropylen)glykol

Auf diesen ausgehärteten Film wurde dann eine Klebstoffschicht aufgebracht, die in der Zusammensetzung und Auftragsmenge der ersten Deckschicht entspricht und mit Hilfe eines Kaschierwerks ein Vlies-Textilträger mit 250g/m² in die noch feuchte Klebstoffschicht einkaschiert. Nach Trocknen des Klebers wurde das so beschichtete Textil vom dehäsiv ausgerüsteten Träger getrennt.

### Beispiel 2 (Vergleichsbeispiel)

Zum Vergleich wurde ein Verbundgebilde auf Basis kommerziell erhältlicher blockierter Butanonoxim-blockierten Polyurethan High Solid-Systeme hergestellt. Die reaktive Streichmasse ist wie folgt zusammengesetzt:
**h)**
   500 g Impranil HS-62® (2-Butanonoxim-blockiertes Präpolymer, Fa. Bayer)
   500 g Impranil HS-80® (2-Butanonoxim-blockiertes Präpolymer, Fa. Bayer)
   71 g Imprafix HS C® (cycloaliphatisches Diamin, Fa. Bayer)
   10 g Levacast Fluid® SN (Verarbeitungshilfsmittel, Fa. Bayer)
   Diese reaktive Streichmasse wurde ebenfalls zu einem Verbundgebilde verarbeitet. Die Verarbeitung erfolgte wie in Beispiel 1, mit der Ausnahme, dass das Aushärten der reaktiven Streichmasse 2 Minuten lang bei 150°C erfolgte.
   Zum Vergleich wurde ein Verbundgebilde auf Basis kommerziell erhältlicher Lösungsmittel-basierter Polyurethan-Systeme hergestellt. Die Streichmasse ist wie folgt zusammengesetzt:
**i)**
   1000 g Impranil ELH A®-Lösung (gelöstes Polyurethanpolymer, ca. 30% Festkörper, Fa. Bayer)

Diese Streichmasse wurde ebenfalls zu einem Verbundgebilde verarbeitet. Die Verarbeitung erfolgte wie in Beispiel 1, mit der Ausnahme, dass das Aushärten der nicht reaktiven Streichmasse 2 Minuten lang bei 85°C erfolgte, bevor mit dem Aufbau fortgefahren wurde.

In der nachfolgenden Tabelle 1 werden die in Beispiel 1 und 2 hergestellten Verbundgebilde hinsichtlich der Eigenschaften der reaktiven Streichmassen, der Produktionseigenschaften und der Eigenschaften des fertig gestellten Verbundgebildes verglichen:

**Tabelle 1**

| | Bsp 2 i) | Bsp 1 a) | Bsp 1 b) | Bsp 1 c) | Bsp 1 d) | Bsp 1 e) | Bsp 2 h) | Bsp 1 f) |
|---|---|---|---|---|---|---|---|---|
| Gewichtsanteil zusätzliches Lösungsmittel [%] | 0 | 0 | 8,3 | 8,3 | 8,3 | 8,3 | 0 | 8,3 |
| Siedepunkt des Lösungsmittels [°C] | - | - | 77 | 80 | 56 | 146 | - | 56 |
| Filmdicke [µm] | 50 | 200 | 200 | 200 | 200 | 200 | 200 | 200 |
| Wasserdampfdurchlässigkeit [mg/cm^{2∗}h] | 0,4 | 1,0 | 4,4 | 5,4 | 10,7 | 2,0 | 1,2 | 4,0 |
| gemäß DIN 53 333 | | | | | | | | |

Die Tabelle 1 verdeutlicht den Einfluss einer Lösungsmittelzugabe auf die Wasserdampfdurchlässigkeit des Films. Es wird gezeigt, dass sich eine im Vergleich zur Aushärtungstemperatur des Films von 155°C niedrige Siedetemperatur des zugesetzten Lösungsmittels positiv auswirkt.

Tabelle 2 stellt die Abhängigkeit der Wasserdampfdurchlässigkeiten (Abkürzung: WDD) an zwei verschiedenen erfindungsgemäßen mikroperforierten Aufbauten dar:
Aufbau I: 200 g/m² Deckstrich auf Basis Bsp 1a), 200 g Haftstrich auf Basis Bsp 1d) und 250 g/m² Polyesterfaservlies
Aufbau II: 200 g/m² Deckstrich auf Basis Bsp. 1a), 200 g Zwischenstrich auf Basis Bsp. 1d) 200 g Haftstrich auf Basis Bsp. 1d) und 250 g/m² Polyesterfaservlies

**Tabelle 2**

| **Aufbau** | **WDD [mg/cm²*h** | **Luftdurchlässigkeit [I/min]** |
|---|---|---|
| I | 3,6 | 7,5 |
| II | 2,5 | 4,5 |

Die Mikroperforation wurde mit 50 Nadeln/cm² und 210°C durchgeführt.
Die Luftdurchlässigkeit wurde nach DIN EN ISO 9237 bestimmt.
Beide Aufbauten I und II zeigen auch in einem Martindale-Abriebtest nach DIN EN ISO 12947-1, der mit einer Belastung von 9 kPa durchgeführt wurde, nach 60.000 Zyklen eine unbeeinträchtigte Oberfläche. Dieser Test dient beispielsweise im Automobilbereich dazu, die Belastungen eines Bespannmaterials für Sitzpolsterungen über den gesamten Einsatzzeitraum zu simulieren.
Die Aufbauten zeigen auch ein gutes Reinigungsverhalten ohne signifikant bleibende Verschmutzung der Oberfläche.
Wird an Aufbau I ein Anschmutztest nach DIN EN ISO 12947-1 durchgeführt, so ist die gemessene Wasserdampfdurchlässigkeit mit einem Wert von 3,7 mg / cm^{2∗}h im Rahmen der Messgenauigkeit unverändert. Die Oberfläche wird nach Reinigung mit einer Note 4,5 bis 5 nach EN ISO 105-A05 beurteilt, d.h. sie ist nahezu unverändert.
Analog ist die an Aufbau II nach einem analogen Anschmutztest gemessene Wasserdampfdurchlässigkeit mit einem Wert von 2,4 mg / cm^{2∗}h im Rahmen de Messgenauigkeit unverändert. Auch die Oberfläche wird nach Reinigung mit einer Note 4,5 bis 5 nach EN ISO 105-A05 beurteilt.

Der Vorteil der Mikroperforation wird auch deutlich, wenn man ein herkömmliches Polyurethankunstleder bestehend aus 50 g/m² Deckstrich der Zusammensetzung aus Bsp. 2i) und 250 g/m² Zwischenstrich der Zusammensetzung aus Bsp.1g), 200 g/m2 Haftstrich ebenfalls der Zusammensetzung aus Bsp.1g) und einem 250 g/m² Polyesterfaservlies als Träger betrachtet, welches mit einer herkömmlichen sichtbaren Perforation versehen ist, wie es z.B. in automobilen Kunstleder-bezogenen Sitzflächen für eine Klimatisierung eingesetzt wird. Hier werden bei einer Lochgröße von 1,2 mm im Durchmesser und einem Lochabstand von 0,9 cm nur Wasserdampfdurchlässigkeiten von 1,5 mg/cm^{2∗}h erreicht.

Die erfindungsgemäße Polymermischung kann auch zur Herstellung von Schuhen und Stiefeln, ebenso zur Herstellung von Zeltplanen und Outdoor-Ausrüstungen, wie z.B. Schlafsäcken verwendet werden.

Die Polymermischung ist zudem zur Herstellung von Abdeckplanen, Membranmaterialien und Filter, Rollstühlen, Fahrradsitzen, Kindersitzen, Griffen, Bedienelementen, Lenkrädern, Sportmatten, Sportgeräten, Fahrrad- und Reitersättel, Kopfbedeckungen aller Art, Tischdecken, Schreibtischunterlagen und ähnliches und allgemein zur Herstellung von Polstern und Kissen geeignet.
Mit der Polymermischung ist es auch möglich einen Schwitzwasserschutz für elektronische Geräte herzustellen.
Ebenso kann die vorliegende Erfindung im Bereich textiles Bauen im Rahmen von Dachunterspannbahnen, klimaaktiven Wanddekormaterialien, Teppichen eingesetzt werden.

## Patentansprüche

1. Polymermischung, insbesondere für wasserdampfdurchlässige und flüssigkeitsundurchlässige Dekorteile in Fahrzeugen und / oder für Sitz- und Liegemöbel, **gekennzeichnet durch** folgende Zusammensetzung:
- 7 - 95 Gew. % zumindest eines aliphatischen und / oder aromatischen Isocyanat-Präpolymeren mit einem Gehalt an Isocyanatgruppen zwischen 2 und 20 Gew. %,
- 5 - 93 Gew. % zumindest eines difunktionellen Polyols,
- 0 - 50 Gew. % zumindest eines tri- oder höherfunktionellen Polyols,
- 0,01 - 2 Gew. % zumindest eines Katalysators,
- 0,5 - 12 Gew. % zumindest eines Reaktionsverzögeres, wobei der Reaktionsverzögerer Acetylaceton und / oder 2-Ethylhexansäure ist,
- 0 - 30 Gew. % zumindest eines Füllstoffes,
- 1 - 25 Gew. % zumindest eines Lösungsmittels mit einem Siedepunkt kleiner oder gleich 150°C und ausgewählt aus der Gruppe bestehend aus Ketonen und / oder Ester und / oder Alkoholen,
- 0 - 45 Gew. % weitere Zusatzstoffe.

2. Polymermischung nach Anspruch 1, **dadurch gekennzeichnet, dass** das Isocyanat-Präpolymer auf der Basis von aliphatischen Isocyanaten ausgewählt aus der Gruppe bestehend aus 1,6-Hexandiisocyanat (HDI) und / oder Isophorondiisocyanat (IPDI) und / oder Dicyclohexylmethan-4,4'-diisocyanat (H₁₂MDI) und / oder 1,4-Cyclohexandiisocyanat und / oder Bis(isocyanatomethyl)cyclohexan aufgebaut ist und einen Masseanteil der freien oder reversibel blockierten NCO-Gruppen zwischen 2 und 20 % besitzt.

3. Polymermischung nach Anspruch 1, **dadurch gekennzeichnet, dass** das Isocyanat-Präpolymer auf der Basis von aromatischen Isocyanaten ausgewählt aus der Gruppe bestehend aus Methylendiisocyanat (MDI) und / oder Toluylendiisocyanat (TDI) und / oder oder Naphthylendiisocyanat aufgebaut ist und einen Masseanteil der freien oder reversibel blockierten NCO-Gruppen zwischen 2 und 20 % besitzt.

4. Polymermischung nach einem der Ansprüche 1 bis 3, **dadurch gekennzeichnet, dass** das difunktionelle und / oder trifunktionelle und / oder höherfunktionelle Polyol ausgewählt ist aus der Gruppe bestehend aus Polyesterpolyolen und / oder Polyetherpolyolen und / oder Polythioethetpolyolen und / oder Polycarbonatpolyolen und / oder hydroxylgruppenhaltige aliphatische Acetalen.

5. Polymermischung nach einem der Ansprüche 1 bis 4, **dadurch gekennzeichnet, dass** ein Metallkatalysator verwendet wird.

6. Polymermischung nach einem der Ansprüche 1 bis 5, **dadurch gekennzeichnet, dass** der Füllstoff ein nicht hydrophiler Füllstoff ist.

7. Polymermischung nach einem der Ansprüche 1 bis 6, **dadurch gekennzeichnet, dass** hydrophile Füllstoffe verwendet werden.

8. Verwendung einer Polymermischung nach einem der Ansprüche 1 bis 7 als Beschichtungsmaterial.

9. Verwendung einer Polymermischung nach einem der Ansprüche 1 bis 7 zum Aufbau mehrschichtiger Verbundgebilde.

10. Wasserdampfdurchlässige und / oder flüssigkeitsundurchlässige Schicht oder Folie aufgebaut aus wenigstens einer Polymermischung nach einem der Ansprüche 1 bis 7.

11. Wasserdampfdurchlässige und / oder flüssigkeitsundurchlässige Schicht oder Folie nach Anspruch 10, **dadurch gekennzeichnet, dass** die Schichtdicke oder die Foliendicke zwischen 5 und 1000 µm beträgt.

12. Wasserdampfdurchlässiges und / oder flüssigkeitsundurchlässiges Verbundgebilde, **dadurch gekennzeichnet, dass** es wenigstens zwei Schichten oder aus wenigstens einer Schicht und einem Trägermaterial besteht, wobei wenigstens eine Schicht aufgebaut ist aus einer Polymermischung nach einem der Ansprüche 1 bis 7.

## Claims

1. Polymer mixture, in particular for water-vapour-permeable and liquid-impermeable decorative parts in vehicles and/or for furniture on which a user is intended to sit or lie, **characterized by** the following composition:
- 7-95% by weight of at least one aliphatic and/or aromatic isocyanate prepolymer with between 2 and 20% by weight content of isocyanate groups,
- 5-93% by weight of at least one difunctional polyol,
- 0-50% by weight of at least one tri- or higher-functional polyol,
- 0.01-2% by weight of at least one catalyst,
- 0.5-12% by weight of at least one reaction retarder, where the reaction retarder is acetylacetone and/or 2-ethylhexanoic acid,
- 0-30% by weight of at least one filler,
- 1-25% by weight of at least one solvent which has a boiling point below or equal to 150°C and selected from the group consisting of ketones and/or esters and/or alcohols,
- 0-45% by weight of other additives.

2. Polymer mixture according to Claim 1, **characterized in that** the isocyanate prepolymer is based on aliphatic isocyanates selected from the group consisting of hexane 1,6-diisocyanate (HDI) and/or isophorone diisocyanate (IPDI) and/or dicyclohexylmethane 4,4'-diisocyanate (H₁₂MDI) and/or cyclohexane 1,4-diisocyanate and/or bis(isocyanatomethyl)cyclohexane, and the proportion by mass of the free or reversibly blocked NCO groups in said prepolymer is between 2 and 20%.

3. Polymer mixture according to Claim 1, **characterized in that** the isocyanate prepolymer is based on aromatic isocyanates selected from the group consisting of methylene diisocyanate (MDI) and/or tolylene diisocyanate (TDI) and/or naphthylene diisocyanate, and the proportion by mass of the free or reversibly blocked NCO groups in said prepolymer is between 2 and 20%.

4. Polymer mixture according to any of Claims 1 to 3, **characterized in that** the difunctional and/or trifunctional and/or higher-functional polyol is selected from the group consisting of polyester polyols and/or polyether polyols and/or polythioether polyols and/or polycarbonate polyols and/or aliphatic acetals containing hydroxy groups.

5. Polymer mixture according to any of Claims 1 to 4, **characterized in that** a metal catalyst is used.

6. Polymer mixture according to any of Claims 1 to 5, **characterized in that** the filler is a non-hydrophilic filler.

7. Polymer mixture according to any of Claims 1 to 6, **characterized in that** hydrophilic fillers are used.

8. Use of a polymer mixture according to any of Claims 1 to 7 as coating material.

9. Use of a polymer mixture according to any of Claims 1 to 7 for the construction of multilayer composites.

10. Water-vapour-permeable and/or liquid-impermeable layer or film composed of at least one polymer mixture according to any of Claims 1 to 7.

11. Water-vapour-permeable and/or liquid-impermeable layer or film according to Claim 10, **characterized in that** the layer thickness or the film thickness is between 5 and 1000 µm.

12. Water-vapour-permeable and/or liquid-impermeable composite, **characterized in that** it consists of at least two layers or of at least one layer and a supportive material, where at least one layer is composed of a polymer mixture according to any of Claims 1 to 7.

## Revendications

1. Mélange de polymères, notamment pour parties décoratives perméables à la vapeur d'eau et imperméables aux liquides dans des véhicules et/ou pour des meubles sièges et/ou couchettes, **caractérisé par** la composition suivante :
- 7 à 95 % en poids d'au moins un prépolymère d'isocyanate aliphatique et/ou aromatique ayant une teneur en groupes isocyanate comprise entre 2 et 20 % en poids,
- 5 à 93 % en poids d'au moins un polyol difonctionnel,
- 0 à 50 % en poids d'au moins un polyol trifonctionnel ou d'une fonctionnalité supérieure,
- 0,01 à 2 % en poids d'au moins un catalyseur,
- 0,5 à 12 % en poids d'au moins un retardateur de réaction, le retardateur de réaction étant de l'acétylacétone et/ou de l'acide 2-éthylhexanoïque,
- 0 à 30 % en poids d'au moins une charge,
- 1 à 25 % en poids d'au moins un solvant ayant un point d'ébullition inférieur ou égal à 150 °C et choisi dans le groupe constitué par les cétones et/ou les esters et/ou les alcools,
- 0 à 45 % en poids d'additifs supplémentaires.

2. Mélange de polymères selon la revendication 1, **caractérisé en ce que** le prépolymère d'isocyanate est formé à base d'isocyanates aliphatiques choisis dans le groupe constitué par le diisocyanate de 1,6-hexane (HDI) et/ou le diisocyanate d'isophorone (IPDI) et/ou le 4,4'-diisocyanate de dicyclohexylméthane (H₁₂MDI) et/ou le diisocyanate de 1,4-cyclohexane et/ou le bis(isocyanatométhyl)cyclohexane, et présente une proportion en masse des groupes NCO libres ou bloqués de manière réversible comprise entre 2 et 20 %.

3. Mélange de polymères selon la revendication 1, **caractérisé en ce que** le prépolymère d'isocyanate est formé à base d'isocyanates aromatiques choisis dans le groupe constitué par le diisocyanate de méthylène (MDI) et/ou le diisocyanate de toluylène (TDI) et/ou le diisocyanate de naphtylène, et présente une proportion en masse des groupes NCO libres ou bloqués de manière réversible comprise entre 2 et 20 %.

4. Mélange de polymères selon l'une quelconque des revendications 1 à 3, **caractérisé en ce que** le polyol difonctionnel et/ou trifonctionnel et/ou d'une fonctionnalité supérieure est choisi dans le groupe constitué par les polyester-polyols et/ou les polyéther-polyols et/ou les polythioéther-polyols et/ou les polycarbonate-polyols et/ou les acétals aliphatiques contenant des groupes hydroxyle.

5. Mélange de polymères selon l'une quelconque des revendications 1 à 4, **caractérisé en ce qu'**un catalyseur métallique est utilisé.

6. Mélange de polymères selon l'une quelconque des revendications 1 à 5, **caractérisé en ce que** la charge est une charge non hydrophile.

7. Mélange de polymères selon l'une quelconque des revendications 1 à 6, **caractérisé en ce que** des charges hydrophiles sont utilisées.

8. Utilisation d'un mélange de polymères selon l'une quelconque des revendications 1 à 7 en tant que matériau de revêtement.

9. Utilisation d'un mélange de polymères selon l'une quelconque des revendications 1 à 7 pour la formation de structures composites multicouches.

10. Couche ou feuille perméable à la vapeur d'eau et/ou imperméable aux liquides formée à partir d'au moins un mélange de polymères selon l'une quelconque des revendications 1 à 7.

11. Couche ou feuille perméable à la vapeur d'eau et/ou imperméable aux liquides selon la revendication 10, **caractérisée en ce que** l'épaisseur de la couche ou l'épaisseur de la feuille est comprise entre 5 et 1 000 µm.

12. Structure composite perméable à la vapeur d'eau et/ou imperméable aux liquides, **caractérisée en ce qu'**elle est constituée par au moins deux couches ou par au moins une couche et un matériau support, au moins une couche étant formée à partir d'un mélange de polymères selon l'une quelconque des revendications 1 à 7.
